Europäisches Patentamt

European Patent Office

Office européen des brevets

(19)

(11) **EP 0 999 639 A1**

(12) **DEMANDE DE BREVET EUROPEEN**

(43) Date de publication:
**10.05.2000 Bulletin 2000/19**

(51) Int Cl.$^7$: **H02P 21/00**

(21) Numéro de dépôt: **99402654.0**

(22) Date de dépôt: **26.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **04.11.1998 FR 9813848**

(71) Demandeur: **Alstom Entreprise SA
92300 Levallois Perret (FR)**

(72) Inventeurs:
• **Thomas, Jean-Luc
77810 Thomery (FR)**
• **Dionnet, Vincent
72500 Château du Loir (FR)**
• **Poullain, Serge
91700 Sainte Genevieve des Bois (FR)**

(74) Mandataire: **Gosse, Michel
ALSTOM Technology - C.I.P.D.
5, Avenue Newton
92142 Clamart Cedex (FR)**

(54) **Procédé de commande pour machine électrique tournante, système d'asservissement pour la mise en oeuvre de ce procédé et machine tournante pourvue d'un tel système**

(57) Procédé de commande du couple d'une machine tournante alimentée par l'intermédiaire d'un onduleur (2) et asservie par un système comprenant des capteurs (6), un observateur (5) et un calculateur (4) qui fournit des commandes à des interrupteurs de l'onduleur à partir des valeurs fournies à l'observateur par les capteurs, par séquences de trois vecteurs pour amener le couple "Γ" et le flux statorique "$\Phi_S$" de la machine vers des valeurs de consigne "$\Gamma_{ref}$" et "$\Phi_{Sref}$". La période d'échantillonnage pour mesure est choisie égale à la période de séquence "DTML" qui correspond à une demi-période de commutation d'onduleur. Les caractéristiques des vecteurs de chaque séquence sont obtenues Dar résolution du système d'équations

$$\begin{cases} \dfrac{d\Gamma}{dt_a} t_a + \dfrac{d\Gamma}{dt_p} t_p = \Gamma_{ref} - \Gamma_n \\ t_a + t_p = DTML \end{cases}$$

où $d\Gamma/dt_a$ et $d\Gamma/dt_p$ sont les variations dans le temps du couple, en cas d'application d'un vecteur actif Va ou passif Vp, $\Gamma_n$ étant le couple courant, $t_a$ et $t_p$ étant les temps d'application respectifs de ces vecteurs.

FIG. 5

FIG. 6

## Description

L'invention concerne un procédé de commande pour machine tournante, un système d'asservissement pour la mise en oeuvre de ce procédé et une machine tournante équipée d'un tel système d'asservissement.

L'alimentation électrique fournie par une source alternative multiphasée aux enroulements statoriques d'une machine tournante asynchrone permet de magnétiser la machine en y générant un flux statorique $\Phi_s$ et un flux rotorique $\Phi_R$ et plus particulièrement d'y créer un couple électromagnétique $\Gamma$. Le pilotage du flux statorique est classiquement exploité avec les machines tournantes asynchrones car il permet notamment de maintenir une machine fonctionnant en moteur dans les limites où l'état électromagnétique est le meilleur possible et où en conséquence le rendement de la conversion de l'énergie électrique reçue en énergie mécanique est le plus élevé.

Le pilotage du couple est bien entendu la sortie essentielle à maîtriser pour une machine fonctionnant en moteur.

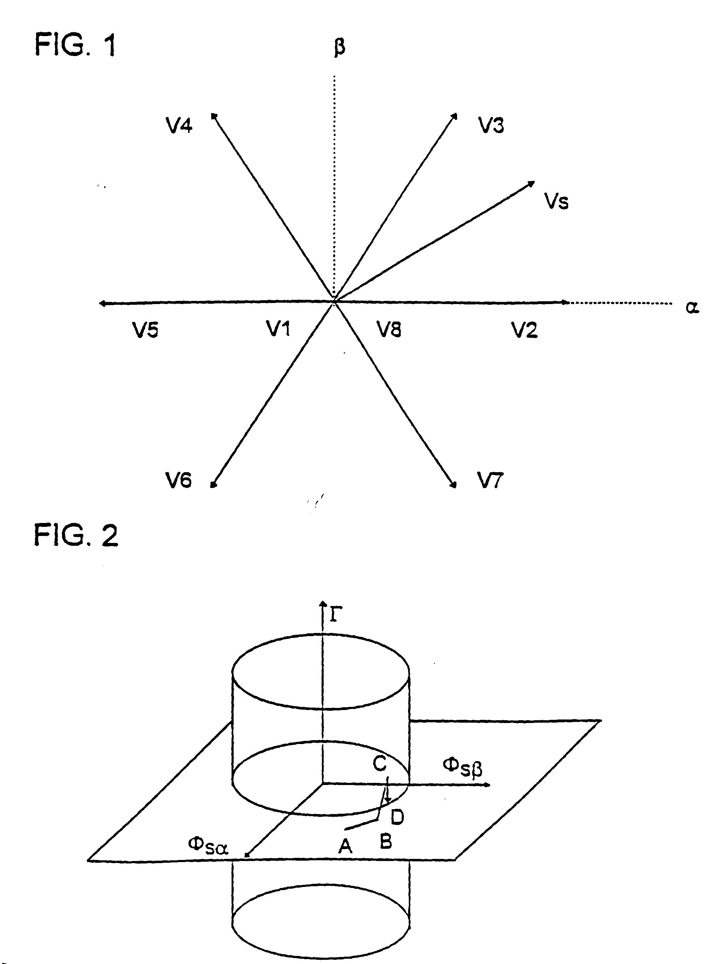

Comme il est connu, la transformation de Concordia permet de définir, au moyen de deux composantes indépendantes $V_{s\alpha}$ et $V_{s\beta}$, la tension d'alimentation Vs appliquée au stator d'un moteur triphasé où le neutre n'est pas distribué. Un procédé de contrôle commande connu est notamment décrit dans le document EP-A-812059. Il concerne une machine tournante à "n" phases alimentée par l'intermédiaire d'un onduleur de tension qui comprend "n" interrupteurs à "m" états, désignés par l'acronyme SPmLL, pour "Single Pole m Logic Levels" et qui permet d'obtenir "$m^n$" états distincts de sortie et donc dans le cas présent "$m^n$" tensions d'alimentation stator distinctes pour la machine, ces tensions étant classiquement représentées chacune par un vecteur à un instant donné. Un système d'asservissement est mis en oeuvre pour que les interrupteurs multi-états se commutent de manière à définir un vecteur d'alimentation optimal à tout instant et à amener le couple $\Gamma$ et le flux statorique $\Phi_S$ de la machine vers le couple de consigne et le flux de consigne qui ont été définis. Ce système d'asservissement comporte un ensemble de capteurs, un observateur et un calculateur. Ce dernier commande la sélection du vecteur d'alimentation optimal en agissant sélectivement sur les interrupteurs. La rotation du vecteur de tension d'alimentation stator Vs d'une machine en fonctionnement se traduit par une évolution de la sélection au cours du temps. Ainsi, dans le cas d'un onduleur triphasé comportant un interrupteur à deux états et donc deux niveaux logiques par phase, la sélection est effectuée parmi huit vecteurs, correspondant aux "$2^3$" combinaisons logiques (ou états de sortie) de l'onduleur, qui sont schématisés sur la figure 1, deux d'entre eux ayant une amplitude nulle et correspondants aux cas où les interrupteurs sont tous ouverts ou tous fermés, comme connu. En conséquence de ce qui a été développé précédemment, l'espace de travail où les procédés, selon le document EP-A-812059 et selon l'invention, sont mis en oeuvre, est le domaine $(\Phi_{s\alpha}, \Phi_{s\beta}, \Gamma)$, qui est subdivisable en deux sous-espaces dont l'un est constitué par le plan $(\Phi_{s\alpha}, \Phi_{s\beta})$ et l'autre par l'évolution temporelle du couple $(\Gamma, t)$.

L'objectif de l'asservissement est de réaliser un contrôle direct du couple r et de l'amplitude du flux statorique $|\Phi_s|$ en fonction de consignes de flux et de couple respectivement désignées par $|\Phi_s|_{ref}$ et $\Gamma_{ref}$. Ces consignes sont traduisibles dans le domaine $(\Phi_{s\alpha}, \Phi_{s\beta}, \Gamma)$ sous une forme géométrique schématisée sur la figure 2, où il est considéré un référentiel à trois dimensions à axe vertical supposé gradué en valeurs de couple $\Gamma$, et à axes horizontaux $\Phi_{s\alpha}$ et $\Phi_{s\beta}$ gradués en valeurs de flux.

Le parcours du flux de consigne $\Phi_{sref}$ correspond à un champ tournant et le cylindre vertical centré sur l'axe de couple r du référentiel est la représentation de la consigne de flux ;

le couple de consigne est ici supposé localisé au niveau du plan horizontal de référence $(\Phi_{s\alpha}, \Phi_{s\beta})$ ramené à la, graduation en valeur de couple de l'axe vertical qui est celle du couple $\Gamma_{ref}$;
le cercle horizontal d'intersection du plan horizontal d'altitude $\Gamma_{ref}$ et du cylindre correspond à la consigne $(|\Phi_s|_{ref}, \Gamma_{ref})$.

L'asservissement a pour objectif de reproduire par une commande appropriée de l'onduleur la trajectoire définie par ce cercle d'intersection, en utilisant au mieux i les moyens que constituent les interrupteurs, tout en respectant au mieux la valeur de consigne de couple. Il n'est pas possible de suivre avec précision dans l'espace la trajectoire qui serait idéale, dans la mesure où le nombre de vecteurs de tension de sortie différents que peut produire un onduleur est limité. Ainsi, si l'on suppose un point A représentatif d'un état courant correspondant à un niveau de flux et à un niveau de couple à un instant donné au cours du fonctionnement d'une machine, comme sur la figure 2, l'objectif de la commande est de commander l'onduleur de manière à tenter d'atteindre un point, tel que D, situé sur le cercle d'intersection dans un intervalle de temps déterminé qui est par exemple égal à $1/2f_d$, $f_d$ étant la fréquence de découpage exploitée par l'onduleur.

En raison du petit nombre de vecteurs de tension de sortie disponibles avec un onduleur, il est nécessaire de mettre en oeuvre plusieurs commandes différentes au cours d'un même intervalle de temps en vue d'obtenir le résultat indiqué ci-dessus, comme symbolisé sur la figure 2 par les trois vecteurs AB, BC, CD qui correspondent chacun à une tension de sortie d'onduleur et donc d'alimentation stator Vs.

Le calculateur du système d'asservissement exploite un algorithme permettant de choisir une séquence optimale de commande d'onduleur pour chacun des intervalles de temps successifs qui subdivisent le temps de fonctionnement de la machine, à partir des valeurs fournies par les capteurs du système d'asservissement et des valeurs de consigne concernant le flux et le couple. Il est notamment prévu dans le document européen évoqué plus haut, que chaque séquence s'étende sur un intervalle de temps égal à $1/2f_d$ et comprenne trois commandes distinctes d'onduleur, qui sont successivement mises en oeuvre et qui correspondent chacune à un vecteur de tension stator Vs différent. Les deux premières de ces commandes sont actives et se traduisent par une variation du couple moteur qui correspond à une accélération ou à un ralentissement du vecteur tournant correspondant au flux statorique $\Phi_s$ par rapport au vecteur tournant de flux rotorique $\Phi_r$, alors que la troisième est passive et permet une réduction du couple qui correspond à un rattrapage du vecteur flux statorique par le vecteur flux rotorique.

La recherche de séquence optimale effectuée pour chaque intervalle de temps a pour objet de déterminer l'unique triplet de commandes à durées respectives positives qui peut permettre d'atteindre un point du cercle d'intersection évoqué plus haut, dans le laps de temps imparti. Cette recherche de séquence optimale peut s'avérer infructueuse dans le cas de grands transitoires, on utilise alors une stratégie plus appropriée comme détaillé dans le document européen cité EP-A-812059.

Comme il est connu, les calculs nécessaires pour déterminer les triplets de commande et plus particulièrement les durées de mise en oeuvre de chaque commande sont complexes et impliquent un investissement logiciel et matériel coûteux.

Au début de chaque cycle de recherche de séquence optimale, l'algorithme exploité par le calculateur choisit l'unique triplet de commandes à durées positives qui permet de rallier le cercle d'intersection au bout d'un intervalle $1/2f_d$.

Dans une première étape correspondant au vecteur AB sur les figures 2 à 4, il est nécessaire d'effectuer des calculs pour le point A et pour tous les points courants A' qui succèdent à A au long du vecteur AB et qui correspondent aux échantillonnages successifs. Ces calculs visent à déterminer les temps restants de conduction dt1, dt2 et dt3 d'application de chacune des trois commandes prévues dans la séquence à partir des équations rappelées ci-dessous, où t est le temps courant:

$$dt1 + dt2 + dt3 = 1/2f_d - t$$

$$\Gamma(1/2f_d) = \Gamma_{ref}$$

$$\Phi_s^2(1/2f_d) = \Phi_s^2 ref$$

Une linéarisation de ce système de trois équations à trois inconnues est effectuée autour du point de fonctionnement et comme l'équation du cylindre est quadratique, il est possible de remplacer l'objectif cylindre D, tel que présenté en figure 2, par un objectif plan tangent au point d'arrivée courant D'.

L'équation 1 obtenue s'écrit:

$$
\begin{bmatrix}
\dfrac{d\Phi_{s\alpha}}{dt}(2) & \dfrac{d\Phi_{s\alpha}}{dt}(3) & \dfrac{d\Phi_{s\alpha}}{dt}(1) & \Phi_{s\beta}(D') \\[2mm]
\dfrac{d\Phi_{s\beta}}{dt}(2) & \dfrac{d\Phi_{s\beta}}{dt}(3) & \dfrac{d\Phi_{s\beta}}{dt}(1) & -\Phi_{s\alpha}(D') \\[2mm]
\dfrac{d\Gamma}{dt}(2) & \dfrac{d\Gamma}{dt}(3) & \dfrac{d\Gamma}{dt}(1) & \acute{O} \\[2mm]
1 & 1 & 1 & 0
\end{bmatrix}
\cdot
\begin{bmatrix}
dt_2 \\[2mm] dt_3 \\[2mm] dt_1 \\[2mm] \lambda
\end{bmatrix}
=
\begin{bmatrix}
\Phi_{s\alpha}(D) - \Phi_{s\alpha}(A') \\[2mm]
\Phi_{s\beta}(D) - \Phi_{s\beta}(A') \\[2mm]
\Gamma(D) - \Gamma(A') \\[2mm]
\dfrac{1}{2.f_d} - t
\end{bmatrix}
$$

elle fournit les trois durées d'application pour une séquence optimale et le paramètre $\lambda$ qui définit le point final D d'une séquence sur la tangente au cercle d'intersection. Lorsque le calcul délivre une valeur de dt2 inférieure à la période d'échantillonnage T, l'instant de commutation de la première étape à la seconde peut être prévu, cet instant correspondant au point B sur les figures 2 à 4. Dans une seconde étape de commande active, correspondant au vecteur BC sur les figures 2 à 4, l'équation 1 ci-dessus est à résoudre en tenant compte du fait que dt2 = 0, or elle ne fournit pas de solution exacte pour dt3. Il est donc nécessaire d'utiliser une solution approchée qui minimise l'erreur, cette solution étant ici supposée obtenue par application de la méthode des moindres carrés. L'équation 2 dérivée de l'équation 1 en prenant en compte les éléments indiqués ci-dessus permet de déterminer la durée dt3 de cette seconde étape et en conséquence la durée dt1 de la dernière des trois étapes de la séquence considérée, ainsi qu'une nouvelle valeur de λ.

Lorsque le calcul délivre une valeur de dt3 inférieure à la période d'échantillonnage T, l'instant de commutation de la seconde étape à la troisième peut être prévu, cet instant correspondant au point C sur les figures 2 à 4. Dans une troisième étape de commande passive, correspondant au vecteur CD, l'équation 2 obtenue de l'équation 1 est à résoudre en tenant compte du fait que dt3 = 0. Elle ne fournit pas non plus de solution exacte et un recours à la méthode des moindres carrés est encore effectué pour fournir une solution approchée. La réalisation des calculs nécessaires au fonctionnement d'une machine piloté par un système d'asservissement mettant en oeuvre les étapes résumées ci-dessus pour chacune des séquences optimales de commande successivement nécessaires implique la mise en oeuvre de moyens tant logiciels que matériels qui ne sont actuellement envisageables qu'avec des machines elles-mêmes déjà à très coûteuses, telles que des machines de très grande puissance et qui ne sont pas adaptés à la commande de machines plus communes.

Pour remédier à cet inconvénient, l'invention propose donc un procédé de commande pour machine tournante à "n" phases alimentée par l'intermédiaire d'un onduleur de tension comprenant "n" interrupteurs à "m" états définissant "$m^n$" états du vecteur tension stator "$V_i$", avec $i \in \{1, ..., m^n\}$, la machine étant asservie en couple électromagnétique "$\Gamma$" et en flux statorique "$\Phi_S$" à un couple électromagnétique "$\Gamma_{ref}$" et à un flux statorique "$\Phi_{Sref}$" de consigne par un système d'asservissement comprenant un ensemble de capteurs, un observateur et un calculateur, ce dernier fournissant des signaux de commande aux interrupteurs multi-états de l'onduleur, par séquences successives de trois commandes successives, à partir des valeurs fournies à l'observateur par les capteurs, le calculateur déterminant pour chaque séquence parmi tous les états $V_i$ du vecteur de tension stator susceptibles d'être fournis par l'onduleur les trois vecteurs de commande successivement exploités pour amener le couple "$\Gamma$" et le flux statorique "$\Phi_S$" vers un couple "$\Gamma_{ref}$" un le flux "$\Phi_{Sref}$" de consigne et pour commander les interrupteurs multi-états en conséquence.

Selon une caractéristique de l'invention, dans un système où la période d'échantillonnage aux fins de mesure est choisie égale à la période "DTML" propre aux séquences de trois commandes successives qui est elle-même égale à la moitié de la période de commutation de l'onduleur, les instants et durées d'application des vecteurs de chaque séquence sont obtenus par résolution du système d'équations

$$\begin{cases} \dfrac{d\Gamma}{dt_a} t_a + \dfrac{d\Gamma}{dt_p} t_p = \Gamma_{ref} - \Gamma_n \\ t_a + t_p = DTML \end{cases}$$

dans lequel $d\Gamma/dt_a$ correspond à la variation dans le temps du couple quand un vecteur actif Va est appliqué, $d\Gamma/dt_p$ correspond à la variation dans le temps du couple quand un vecteur passif Vp est appliqué, $\Gamma_{ref}$ étant le couple de consigne, $\Gamma_n$ étant le couple courant, $t_a$ et $t_p$ étant les temps d'application respectifs des vecteur(s) actif(s) et passif.

Ceci permet notamment de réaliser une stratégie de commande d'onduleur dans laquelle la répartition des vecteurs de commande permet de symétriser les ordres de commande donnés aux interrupteurs de l'onduleur qui conduit à un contenu harmonique de couple entraînant une minimisation des pulsations de couple sur l'arbre de machine.

L'invention, ses caractéristiques et ses avantages sont précisés dans la description qui suit en liaison avec les figures évoquées ci-dessous, dont les cinq premières sont relatives à l'art connu.

La figure 1 est une représentation vectorielle instantanée des différentes tensions fournies au stator d'une machine tournante par un onduleur comportant trois interrupteurs à deux niveaux logiques.

La figure 2 est une représentation de l'espace de travail exploité dans le cadre de l'invention.

La figure 3 est une représentation, dans le plan de travail d'axes $\Phi_{s\alpha}$, $\Phi_{s\beta}$, d'une séquence de commandes prévue pour rallier le cercle de consigne ($|\Phi_s|_{ref}$. $\Gamma_{ref}$).

La figure 4 est une représentation temporelle du couple où sont illustrées les étapes d'une séquence de commande.

La figure 5 est un schéma de principe d'une machine tournante équipée d'un système d'asservissement.

La figure 6 est une représentation temporelle d'une suite de séquences de commande, selon l'invention.

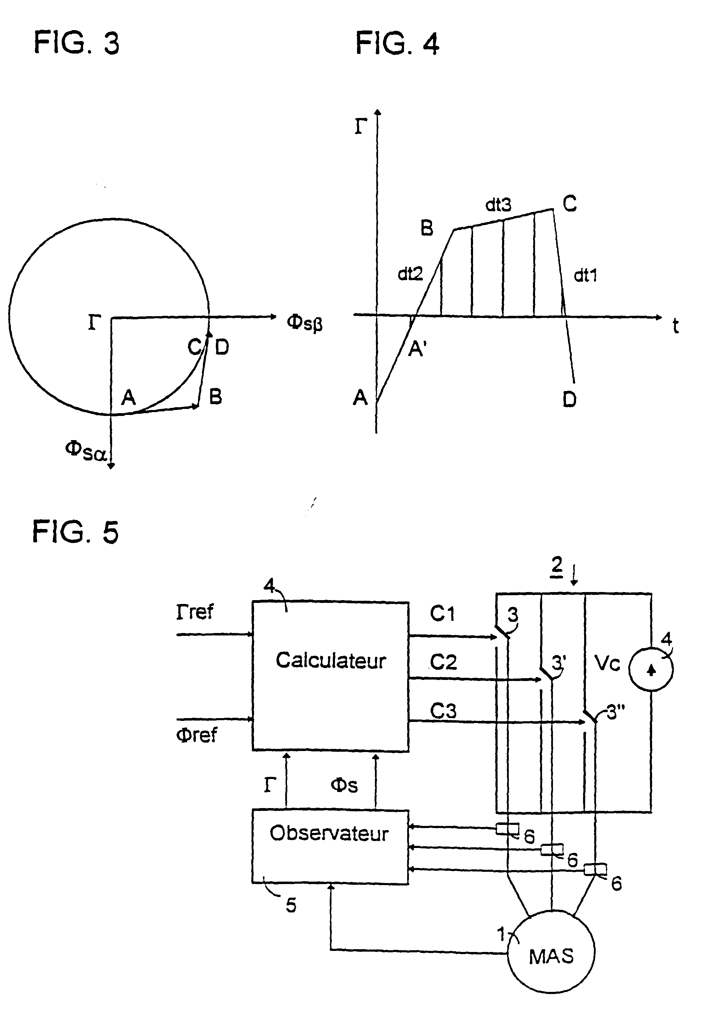

Le procédé de commande selon l'invention est destiné à être mis en oeuvre pour contrôler le couple d'une machine tournante dans le cadre d'un ensemble tel que schématisé sur la figure 5. Cet ensemble comporte une machine tournante 1 à "n" phases alimentée en courant alternatif par un onduleur de tension 2 comprenant "n" interrupteurs à "m" états et définissant donc $m^n$ états de vecteur de tension de sortie $V_s$, trois interrupteurs 3, 3', 3" à deux états étant représentés sur la figure 5. Un système d'asservissement assure une commande sélective et coordonnée de chacun des interrupteurs par des signaux ici référencés Cl, C2, C3. Ces signaux sont établis par l'intermédiaire d'un calculateur 4 dûment programmé auquel des indications de couple de consigne $\Gamma_{ref}$ et de flux de consigne $\Phi_{ref}$ ont été fournies. Le système d'asservissement comporte aussi un observateur 5 qui déduit les valeurs du couple électromécanique $\Gamma$ et du flux statorique $\Phi_S$ instantanés des mesures effectuées par un ensemble de capteurs 6 au niveau des liaisons électriques d'alimentation machine. Les constitutions des différents organes évoqués ci-dessus ne sont pas développées ici dans la mesure où elles sont sans rapport direct avec l'objet de l'invention et connues de l'homme de métier. Le procédé de commande selon l'invention exploite le modèle de prédiction des temps de commutation défini ci-dessus en liaison avec les figures 1 à 4, mais en exploitant une technique qui permet de limiter drastiquement les calculs de l'art antérieur évoqué dans le préambule de cette demande. Il permet d'effectuer un asservissement en boucle de commande de couple en prenant en compte les contraintes relatives au flux.

L'espace de travail pris en compte est de nouveau le référentiel ($\Phi_{s\alpha}$, $\Phi_{s\beta}$, $\Gamma$) schématisé sur la figure 2. Il est prédéterminé que les séquences optimales de commande sont constituées chacune par un triplet de commandes, elles se succèdent avec une périodicité, dite DTML, égale à $1/2f_d$, c'est-à-dire à la moitié de la période de commutation de l'onduleur. La période d'échantillonnage est ici choisie égale à la période DTML, aux fins de mesure.

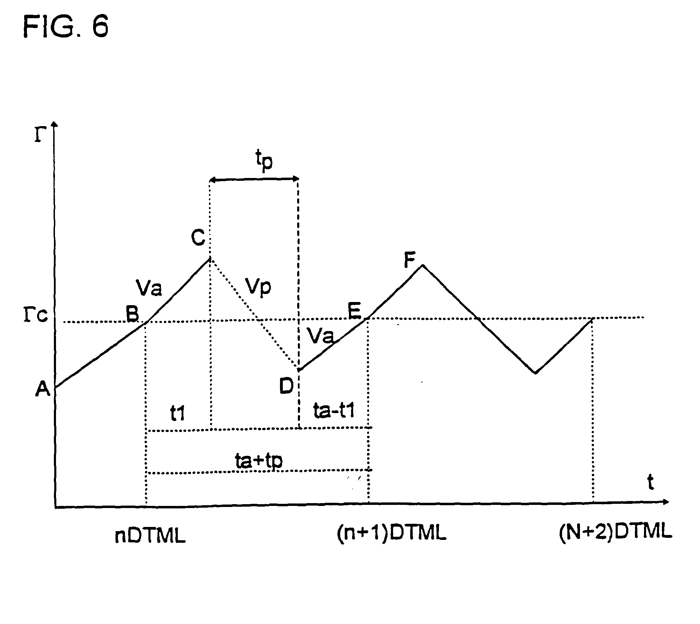

Selon l'invention, le procédé prévoit que le calculateur ne sélectionne que deux des "$m^n$" vecteurs de tension de sortie Vs, qui sont susceptibles d'être générés par l'onduleur 2, pour les calculs relatifs à la détermination des temps pour une séquence optimale constituée par un triplet de commandes. La simplification de ces calculs est rendue possible par un déplacement du point pris comme origine lors du calcul pour chaque séquence, comme représenté sur la figure 6.

Dans l'exemple de séquence optimale antérieurement prise en compte et présentée sur la figure 4, le point d'origine pour le calcul d'une séquence optimale est l'origine A du vecteur AB. Il correspond à l'instant de commutation, au niveau de l'onduleur, qui conduit à l'application de la tension de sortie Vs correspondant à ce vecteur AB au stator de la machine asservie.

Selon l'invention, il est prévu un déplacement du point d'origine pour le calcul relatif à une séquence optimale de manière à n'avoir à prendre en compte que deux vecteurs par période DTML. Ce déplacement conserve une séquence optimale formée par un triplet de commandes composé de deux commandes actives et d'une commande passive. Chacune des périodes d'échantillonnage DTML successives commence à l'instant de transition entre deux commandes actives successives appartenant donc à deux séquences successives. Cet instant correspond par exemple au point B de transition entre le vecteur AB et le vecteur BC, ou encore au point E de transition entre les vecteurs successifs DE et EF respectivement situés, l'un dans la période d'échantillonnage bornée par les instants nDTML et (n+1)DTML et l'autre dans la période suivante.

Selon l'invention, il est prévu de calculer les durées $t_p$ et $t_a$ correspondant aux temps d'application respectifs du vecteur passif et des deux vecteurs actifs mis en oeuvre au cours d'une période. Ce calcul permet de déterminer les variations de couple $d\Gamma/dt_a$ et $d\Gamma/dt_p$ respectivement associées au vecteur actif et au vecteur passif.

Si $d\Gamma/dt_a$ correspond à la variation dans le temps du couple quand un vecteur actif Va est appliqué, si $d\Gamma/dt_p$ correspond à la variation dans le temps du couple quand un vecteur passif $V_p$ est appliqué, si $\Gamma_{ref}$ est le couple de consigne et si $\Gamma_n$ est le couple courant, il est possible de calculer les valeurs de $t_a$ et $t_p$ à partir du système d'équation défini ci-dessous:

$$\begin{cases} \dfrac{d\Gamma}{dt_a}t_a + \dfrac{d\Gamma}{dt_p}t_p = \Gamma_{ref} - \Gamma_n \\ t_a + t_p = DTML \end{cases}$$

Il est prévu de choisir le vecteur actif qui correspond aux erreurs minimales de flux parmi les vecteurs actifs potentiels qui sont adjacents au dernier vecteur actif utilisé, dans le cadre du référentiel ($\alpha,\beta$) schématisé sur la figure 1

Il est aussi possible de choisir, en tant que vecteur actif, celui qui minimise les ondulations de couple pour une fréquence de commutation déterminée.

Si la régulation réalisée était mathématiquement exacte, on aurait toujours $\Gamma_{ref} = \Gamma_n$ et le partage en deux du vecteur actif conduirait à une répartition symétrique. Dans la pratique, le couple courant $\Gamma_n$ est différent du couple de consigne $\Gamma_{ref}$ et la répartition entre vecteurs d'un triplet de commande est $(V_a, t_1)$, $(V_p, T_p)$ et $(V_a, t_a - t_1)$, comme illustré sur la figure 6.

Un ajustement du couple peut être obtenu en jouant sur la durée $t_1$ dans l'intervalle de disponibilité correspondant à la durée globale d'application $t_a$ partagée par les deux vecteurs actifs d'un même triplet.

Ce partage de temps est défini par l'équation :

$$t_1 = \frac{2(\Gamma_{ref} - \Gamma_n)DTML - t_a^2 d\Gamma_a / dt - t_p d\Gamma_p / dt.DTML}{(2d\Gamma_a / dt - d\Gamma_p / dt).t_p}$$

La séquence de commandes (Va, $t_1$); (Vp, $t_p$); (Va, $t_a$ - $t_1$) assure le contrôle du couple moyen à la valeur de consigne et du couple final à la valeur de consigne avec une minimisation de l'erreur sur les flux statoriques.

**Revendications**

1. Procédé de commande du couple électromagnétique d'une machine tournante à "n" phases alimentée par l'intermédiaire d'un onduleur (2) comprenant "n" interrupteurs (3, 3', 3"), à "m" états chacun, définissant "$m^n$" états du vecteur tension stator "$V_i$", avec $i \in \{1, ..., m^n\}$, la machine étant asservie en couple électromagnétique "$\Gamma$" et en flux statorique "$\Phi_S$" à un couple électromagnétique "$\Gamma_{ref}$" et à un flux statorique "$\Phi_{Sref}$" de consigne par un système d'asservissement comprenant un ensemble de capteurs (6), un observateur (5) et un calculateur (4), ce dernier fournissant des signaux de commande aux interrupteurs multi-états de l'onduleur par séquences successives de trois commandes successives, à partir des valeurs fournies à l'observateur par les capteurs, le calculateur déterminant pour chaque séquence, parmi tous les états $V_i$ possibles du vecteur de tension stator, les trois vecteurs de commande successivement exploités pour amener optimalement le couple "$\Gamma$" et le flux statorique "$\Phi_S$" vers le couple "$\Gamma_{ref}$" et le flux "$\Phi_{Sref}$" de consigne et pour commander les interrupteurs multi-états en conséquence, caractérisé en ce que, dans un système où la période d'échantillonnage aux fins de mesure est choisie égale à la période "DTML" propre aux séquences de trois commandes successives qui est elle-même égale à la moitié de la période de commutation de l'onduleur, les instants et durées d'application des vecteurs de chaque séquence sont obtenus par résolution du système d'équations

$$\begin{cases} \dfrac{d\Gamma}{dt_a} t_a + \dfrac{d\Gamma}{dt_p} t_p = \Gamma_{ref} - \Gamma_n \\ t_a + t_p = DTML \end{cases}$$

dans lequel $d\Gamma/dt_a$ correspond à la variation dans le temps du couple quand un vecteur actif Va est appliqué, $d\Gamma/dt_p$ correspond à la variation dans le temps du couple quand un vecteur passif Vp est appliqué, $\Gamma_{ref}$ étant le couple de consigne, $\Gamma_n$ étant le couple courant, $t_a$ et $t_p$ étant les temps d'application respectifs des vecteur(s) actif(s) et passif.

2. Procédé selon la revendication 1, dans lequel le temps d'application du vecteur actif pour une séquence est partagé de part et d'autre du temps d'application du vecteur passif selon l'équation suivante:

$$t_1 = \frac{2(\Gamma_{ref} - \Gamma_n)DTML - t_a^2 d\Gamma_a / dt - t_p d\Gamma_p / dt.DTML}{(2d\Gamma_a / dt - d\Gamma_p / dt).t_p}$$

3. Système d'asservissement d'une machine tournante à "n" phases qui est alimentée par l'intermédiaire d'un onduleur (2) comprenant "n" interrupteurs multi-états (3, 3', 3") définissant "$m^n$" états du vecteur tension stator "$V_i$", avec $i \in \{1, ..., m^n\}$ et qui est asservie en couple électromagnétique "$\Gamma$" et en flux statorique "$\Phi_S$" à un couple électromagnétique "$\Gamma_{ref}$" et à un flux statorique "$\Phi_{Sref}$" de consigne, ledit système d'asservissement comprenant un ensemble de capteurs (6), un observateur (5) et un calculateur (4), ce dernier fournissant des signaux de commande aux interrupteurs multi-états de l'onduleur, par séquences successives de trois commandes successives, à partir des valeurs fournies à l'observateur par les capteurs, le calculateur déterminant pour chaque séquence, parmi tous les états $V_i$ possibles du vecteur de tension stator, les trois vecteurs de commande successivement exploités pour amener le couple "$\Gamma$" et le flux statorique "$\Phi_S$" vers le couple "$\Gamma_{ref}$" et le flux "$\Phi_{Sref}$" de consigne et pour commander les interrupteurs multi-états en conséquence, caractérisé en ce qu'il met en oeuvre le procédé selon l'une des revendications 1, 2.

4. Machine tournante à "n" phases alimentée par l'intermédiaire d'un onduleur (2) comprenant "n" interrupteurs multi-états (3, 3', 3") définissant "mn" états du vecteur tension stator "$V_i$", avec $i \in \{1 ..., m^n\}$, la machine étant asservie en couple électromagnétique "$\Gamma$" et en flux statorique "$\Phi_S$" à un couple électromagnétique "$\Gamma_{ref}$" et à un flux sta-

torique "$\Phi_{Sref}$ "de consigne par un système d'asservissement comprenant un ensemble de capteurs (6), un observateur (5) et un calculateur (4), ce dernier fournissant des signaux de commande aux interrupteurs multi-états de l'onduleur, par séquences successives de trois commandes successives, à partir des valeurs fournies à l'observateur par les capteurs, le calculateur déterminant pour chaque séquence, parmi tous les états $V_i$ possibles du vecteur de tension stator, les trois vecteurs de commande successivement exploités pour amener le couple "$\Gamma$" et le flux statorique "$\Phi_S$" vers le couple "$\Gamma_{ref}$" et le flux "$\Phi_{Sref}$ " de consigne et pour commander les interrupteurs multi-états en conséquence, caractérisé en ce qu'elle est équipée d'un système d'asservissement mettant en oeuvre le procédé selon l'une des revendications 1, 2.

FIG. 1

FIG. 2

# FIG. 3

$\Gamma$

$\Phi_{s\beta}$

$\Phi_{s\alpha}$

C, D, A, B

# FIG. 4

$\Gamma$

B, dt3, C

dt2

A', dt1

A, D

t

# FIG. 5

$\Gamma$ref

$\Phi$ref

Calculateur — 4

C1 → 3

C2 → 3'

C3 → 3"

Vc

4

2

$\Gamma$   $\Phi$s

Observateur — 5

6, 6, 6

1 — MAS

FIG. 6

# EP 0 999 639 A1

**Office européen des brevets**

## RAPPORT DE RECHERCHE EUROPEENNE

Numéro de la demande

EP 99 40 2654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | YONGDONG L ET AL: "DIRECT TORQUE CONTROL OF INDUCTION MOTOR FOR LOW SPEED DRIVES CONSIDERING DISCRETE EFFECTS OF CONTROL AND DEAD-TIME OF INVERTER" , IAS '97. CONFERENCE RECORD OF THE 1997 IEEE INDUSTRY APPLICATIONS CONFERENCE 32ND. IAS ANNUAL MEETING, NEW ORLEANS, LA, OCT. 5 - 9, 1997, VOL. VOL. 1, PAGE(S) 781 - 788 , INSTITUTE OF ELECTRICAL AND ELECTRONICS ENGINEERS XP000775232ISBN: 0-7803-4068-X | 1,3,4 | H02P21/00 |
| A | Equations 9,14,15,16 et 19 | 2 | |
| | --- | | |
| A | EP 0 858 155 A (ALSTHOM CGE ALCATEL) 12 août 1998 (1998-08-12) * page 7, ligne 55 - page 8, ligne 8 * * revendications 1-3 * | 1-4 | |
| | --- | | |
| A | JOBING R ET AL: "DIGITAL IMPLEMENTATION OF BUS CLAMPED SPACE VECTOR MODULATION" IEEE TRANSACTIONS ON ENERGY CONVERSION, vol. 9, no. 2, 1 juin 1994 (1994-06-01), pages 344-348, XP000458873 ISSN: 0885-8969 * page 346, colonne 1; figures 5,6 * ----- | 1-4 | DOMAINES TECHNIQUES RECHERCHES (Int.Cl.7) H02P |

Le présent rapport a été établi pour toutes les revendications

| Lieu de la recherche | Date d'achèvement de la recherche | Examinateur |
|---|---|---|
| BERLIN | 24 février 2000 | Roy, C |

**ANNEXE AU RAPPORT DE RECHERCHE EUROPEENNE
RELATIF A LA DEMANDE DE BREVET EUROPEEN NO.**

EP 99 40 2654

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2000

| Document brevet cité au rapport de recherche | Date de publication | Membre(s) de la famille de brevet(s) | | Date de publication |
|---|---|---|---|---|
| EP 0858155 A | 12-08-1998 | FR | 2759216 A | 07-08-1998 |
| | | AU | 5293898 A | 13-08-1998 |
| | | BR | 9800572 A | 21-09-1999 |
| | | CA | 2226390 A | 06-08-1998 |
| | | CN | 1193843 A | 23-09-1998 |
| | | JP | 10240349 A | 11-09-1998 |

EPO FORM P0460

Pour tout renseignement concernant cette annexe : voir Journal Officiel de l'Office européen des brevets, No.12/82